# EUROPEAN PATENT APPLICATION

(11) **EP 1 624 449 A2**
(43) Date of publication of application: **08.02.2006**
(21) Application number: 05107163.7
(22) Date of filing: 03.08.2005
(51) Int. Cl.: G11B 5/53, G11B 5/10, G11B 5/105

(54) **Rotary drum**

(30) Priority: 04.08.2004 KR 2004061338
(71) Applicant: SAMSUNG ELECTRONICS CO., LTD., Suwon-si, Gyeonggi-do (KR)
(72) Inventor: Baik, Chung-hum 106-1102 Dongsuwon LG Village, Gyeonggi-do (KR); Kim, Myoung-joon 2-201 Green Villa, Gyeonggi-do (KR); Kim, Bong-joo 208-1001 dongsuwon LG Village, Gyeonggi-do (KR); Seo, Jae-kab 114-507,101-114 Dongsuwon LG Village, Gyeonggi-do (KR); Kim, Jun-young 108-1904 Dongsuwon LG village 1st, Gyeonggi-do (KR); Cho, Young-ho 101-502 Samsung Apartment, Gyeonggi-do (KR)
(74) Representative: Grey, Ian Michael

(57) **Abstract**

A head drum assembly and a method for cutting a rotary drum for the head drum assembly are provided. The head drum assembly includes a stationary drum fixed around a shaft, and a rotary drum rotatably mounted around the shaft. A magnetic head unit is mounted to the rotary drum and has a magnetic head. A head distancing groove is formed on a bottom part of the rotary drum in a circumferential direction of the rotary drum to substantially prevent the magnetic head from contacting the rotary drum. At least one head window is connected with the head distancing groove. The magnetic head protrudes out through the head window. Because the head distancing groove is formed in a circumferential direction of the shaft of the rotary drum, the head distancing groove may be processed by lathing. Thus, the number of processes required to form the rotary drum may be reduced, thereby saving manufacturing costs.

## Description

The present invention relates to a rotary drum for a head drum assembly of a magnetic recording apparatus having a surface in which a recess is formed to receive a recording head of a magnetic head unit attached to said surface so that the recording head does not touch the rotary drum, the rotary drum further including a slot through which a recording head of a magnetic head unit attached to said surface protrudes from the recess and, a method of producing the same.

Generally, a magnetic recording and reproducing apparatus records information on a recording medium, such as a magnetic tape, and reproduces the recorded information. Video cassette tape recorders (VCR) and camcorders are examples of magnetic recording and reproducing apparatuses.

A magnetic recording and reproducing apparatus includes a main deck, a head drum assembly rotatably mounted to the main deck to record and reproduce information with respect to a magnetic tape, and a tape guiding means for guiding running of the magnetic tape. A head drum assembly is slanted at a certain angle with respect to the main deck to improve the recording and reproducing function. The head drum assembly comprises a stationary drum, a rotary drum, a drum cover, a shaft and a magnetic head unit. The stationary drum is fixed to the shaft, and the rotary drum is mounted opposite to the stationary drum to rotate on the shaft. The rotary drum supports a magnetic head for scanning the running magnetic tape to record and reproduce information.

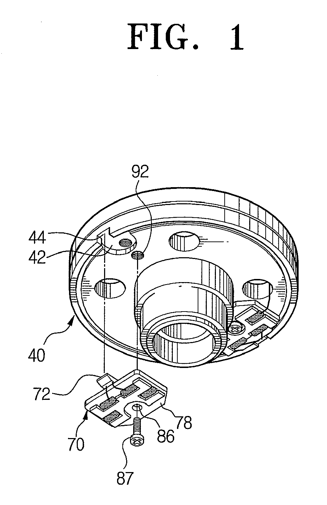

Figure 1 is a perspective view showing a rotary drum 40 of a head drum assembly and a magnetic head unit 70 mounted to the rotary drum 40. As shown in Figure 1, the magnetic head unit 70 includes a magnetic head base 78 and a magnetic head 72. The magnetic head base 78 has a fastening hole 86 therethrough to allow the magnetic bead base 78 to be connected to the rotary drum 40. A fastening member 87 is connected through the fastening hole 86 and into a rotary drum fastening hole 92 formed on the rotary drum 40.

The rotary drum 40 has a head groove 42 for mounting the magnetic head unit 70. The head groove 42 prevents contact between the magnetic head 72 and the rotary drum 40. A head window 44 is formed on an outer circumference of the rotary drum 40 in communication with the head groove 42. The magnetic head 72 protrudes out of the outer circumference of the rotary drum 40 through the head window 44 in order to be positioned so as to record and reproduce information with respect to the magnetic tape (not shown).

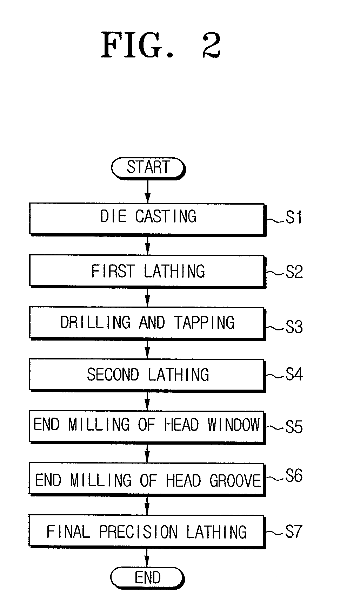

A conventional processing method for producing the above-structured rotary drum 40 is described below, with reference to Figure 2.

The rotary drum 40 is formed by die casting (S1). After the die casting formation, the rotary drum 40 undergoes a cutting step. Generally, the cutting is performed using a precision machine tool, for example, a computer numeric controller (CNC). Hereinbelow, the cutting step is described in detail.

Referring to Figure 2, the rotary drum 40 formed by the die casting is processed by a first lathing (S2). A flank and a bottom of the rotary drum 40 are formed by the first lathing. Drilling and tapping processes follow (S3) in which the drilling forms a plurality of holes in the rotary drum 40 and the tapping forms a screw thread on the holes formed by drilling. When the drilling and the tapping are completed, a second lathing is performed (S4) to form the rotary drum 40 on portions uncut during the first lathing. Usually, a top side is cut in the second lathing. An end milling operation is then performed to form the head window 44 (S5) and after forming the head window 44, the head groove 42 is formed by end milling (S6). Last, a final precision lathing for precisely forming measurements of the rotary drum 40 is performed (S7), thereby completing the cutting of the rotary drum 40.

However, in the end milling process (S5 and S6), a great load is applied to a chuck supporting a rotary drum being processed and to the tools for processing the rotary drum. This problem occurs especially during the end milling process for cutting the head groove 42 (S6) because the head groove 42 has a relatively broader processing area than the head window 44. The chuck can be damaged by this high load, and moreover, precise processing is difficult because the chuck is moved by the load. Accordingly, a need exists for a processing method for the head drum assembly that reduces the number of processes and facilitates the processing, particularly by reducing or eliminating the end milling steps and a need exists for an improved head drum assembly that is quickly and easily manufactured, and a simple and economical method of manufacturing the improved head drum assembly. It is therefore an aspect of the present invention is to provide an improved rotary drum and head drum assembly including a rotary drum that is easily processed and, a simple and economical method for processing the rotary drum.

Accordingly, the head drum of the present invention is characterised in that the recess is an annular groove.

Preferably, a plurality of slots are formed in the surface of the rotary drum through which a recording head of a corresponding plurality of magnetic head units attached to said surface protrude from the recess. Conveniently, the annular groove is coaxial with the axis of rotation of the rotary drum.

Furthermore, the present invention provides a method of manufacturing a rotary drum for a head drum assembly of a magnetic recording apparatus including the step of cutting an annular groove in a surface of the rotary drum to receive a recording head of a magnetic head unit attached to said surface so that the recording head does not touch the rotary drum and, a slot through which a recording head of a magnetic head unit attached to said surface protrudes from the annular groove. The annular groove is preferably formed by lathing.

A head drum assembly includes a stationary drum fixed around a shaft, a rotary drum rotatably mounted around the shaft, a magnetic head unit mounted to the rotary drum and having a magnetic head, a head distancing groove formed on a bottom part of the rotary drum in a circumferential direction of the rotary drum to substantially prevent the magnetic head from contacting the rotary drum, and a plurality of head windows connected in communication with the head distancing groove so that the magnetic head protrudes therethrough. Therefore, the processing is simplified, and manufacturing costs are reduced.

The head distancing groove is annularly formed around the shaft of the rotary drum.

A pair of the head windows may be symmetrically provided.

The head drum assembly may further include a horizontality adjusting member for controlling horizontality of the magnetic head unit. A fastening member connects the magnetic head to the head drum. A fastening hole is formed at a portion of the rotary drum adjacent to the head distancing groove to receive the fastening member.

A method for processing the rotary drum includes the steps of a) processing a head distancing groove by lathing a rotary drum formed by die casting; b) drilling and tapping the rotary drum; and c) end milling a head window so that a magnetic head protrudes out of an outer circumference of the rotary drum.

The step a) includes the steps of a first lathing for processing a head distancing groove on a side of the rotary drum to substantially prevent contact of the magnetic head with the rotary drum, and a second lathing for secondarily processing the rotary drum after step b).

According to the above, the number of processes may be reduced, and further, the processing is facilitated.

Other objects, advantages and salient features of the invention will become apparent from the following detailed description, which, taken in conjunction with the annexed drawings, discloses preferred embodiments of the invention.

A preferred embodiment of the present invention will now be described, by way of example only, with reference to the accompanying drawings, in which:
Figure 1 is a perspective view of a conventional rotary drum;
Figure 2 is a flow chart that illustrates a method for producing the rotary drum of Figure 1;
Figure 3 is an exploded, perspective view of a head drum assembly according to an embodiment of the present invention;
Figure 4 is an elevational view in partial cross section along line IV-IV of Figure 3; and
Figure 5 is a flow chart of a method for producing a rotary drum of a head drum assembly according to an embodiment of the present invention.

Throughout the drawings, like reference numerals will be used to refer to like parts, components and structures.

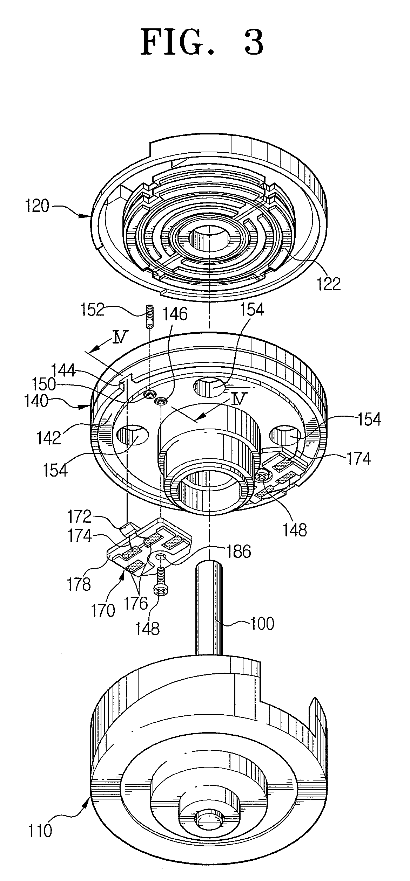

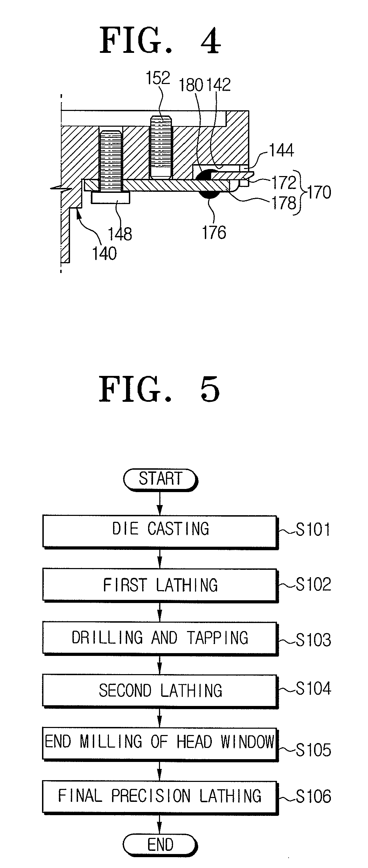

Referring to Figures 3 and 4, a head drum assembly includes a stationary drum 110 fixed to a shaft 100, a rotary drum 140 rotatably mounted to a shaft 100 to be disposed above the stationary drum 110, and a drum cover 120 mounted above the rotary drum 140.

The stationary drum 110 is fixed to and encloses the shaft 100. The rotary drum 140 is connected to the shaft 100 in a manner that the rotary drum 140 is disposed above the stationary drum 110 and opposite to the stationary drum 110. A bearing (not shown) is disposed between the rotary drum 140 and the shaft 100.

The drum cover 120 is disposed above the rotary drum 140 and fixed around the shaft 100. The drum cover 120 and the rotary drum 140 respectively have a fixed transfer 122 and a rotary transfer (not shown) facing the fixed transfer 122 which transfers information read from a magnetic head unit 170.

In use, the rotary drum 140 fixed around the shaft 100 between the stationary drum 110 and the drum cover 120 rotates at a high speed. The rotary drum 140 supports the magnetic head unit 170 that scans a running magnetic tape (not shown) to record and reproduce the information with respect to the magnetic tape (not shown).

The rotary drum 140 has a head window 144 at a bottom thereof, such that a magnetic head 172 is exposed out of an outer circumference of the rotary drum 140 for recording and reproducing information. A pair of the head windows 144 may be symmetrically provided. However, the number of the head window 144 is not limited, and depends on the number of magnetic heads 172. Additionally, an annular head distancing groove 142 is formed in a circumferential direction on the bottom of the rotary drum 140 and is in communication with the head window 144. The head distancing groove 142 has a depth (see Figure 4) that is sufficient to substantially prevent the magnetic head 172 and an adhesive 180 for attaching the magnetic head 172 to the magnetic head base 178 from contacting the bottom surface of the rotary drum 140. The circumferential head distancing groove 142 may be simply processed by lathing, without requiring a dedicated end milling process step. The head distancing groove 142 of the annular form enables the end milling step required for processing the conventional head groove 42 to be eliminated (Figure 1).

The bottom of the rotary drum 140 is provided with a rotary drum fastening hole 146 and an adjusting hole 150 that are adjacent to the head distancing groove 142. The rotary drum fastening hole 146 and the adjusting hole 150 are disposed adjacent to each other and outside of the head distancing groove 142. The adjusting hole 150 is formed between the head distancing groove 142 and the rotary drum fastening hole 146, and receives a horizontality adjusting member 152 for controlling horizontality of the magnetic head unit 170 when secured to the rotary drum 140. The horizontality of the magnetic head unit 170 may be controlled by rotating the horizontality adjusting member 152 in screw threads provided in the adjusting hole 150 so that it protrudes from the adjusting hole 150 by a required amount to push against the magnetic head unit 170. At opposite sides of the rotary drum fastening hole 146, a plurality of holes 154 are formed to receive a coil 174 connected to the magnetic head 172 to be connected to a rotor transfer (not shown) mounted on an upper portion of the rotary drum 140.

In use, the magnetic head unit 170 scans the magnetic tape to record information or reproduce the recorded information. The magnetic head unit 170 includes a magnetic head 172, an end of which protrudes out of the outer circumference of the rotary drum 140, and a magnetic head base 178 upon which the magnetic head 172 is mounted. The magnetic head unit 170 has the coil 174 for recording and reading the information with respect to the magnetic tape and transmitting the read information to a stator transfer 122 of the drum cover 120. The coil 174 is fixed by a welding part 176 and connected to the rotor transfer (not shown) disposed on the upper portion of the rotary drum 140. The magnetic head 172 is attached by the adhesive 180 onto a top portion of the magnetic head base 178 (see Figure 4). Although adhesive 180 is used to attach the magnetic head 172 in this exemplary embodiment, the magnetic head 172 may alternatively be integrally formed with the magnetic head base 178.

The magnetic head base 178 has a magnetic head base fastening hole 186 for mounting the magnetic head base 178 to the rotary drum 140. The fastening holes 146 and 186 have screw threads, respectively, so that the fastening hole 146 and 186 may be connected by a fastener, such as a screw 148, thereby mounting the magnetic head base 178 to the rotary drum 140.

Figure 5 is a flowchart illustrating a processing method for producing the rotary drum 140 of the head drum assembly according to an exemplary embodiment of the present invention.

Referring to Figure 5, the rotary drum 140 is first formed by die casting (S101). The rotary drum 140 is then processed in a first lathing operation by a machine tool, such as a computer numeric controller (CNC) (S102). The first lathing forms a flank and a bottom of the rotary drum 140, as well as forming the head distancing groove 142 in the bottom of the rotary drum 140. Drilling and tapping processes follow (S103) in which the drilling forms a plurality of holes in the rotary drum 140 and the tapping forms screw threads in the required holes formed by drilling. The drilling and the tapping steps are performed by machine tools, such as drilling machines.

When the drilling and the tapping steps are completed, a second lathing operation is performed (S104) to process the rotary drum 140 on portions uncut during the first lathing. Usually, a top side is processed in the second lathing. After the second lathing, an end milling is performed to form the head window 144 (S105) such that the head window 144 is connected to the head distancing groove 142 formed by the first lathing step.

Therefore, the end milling is much quicker and easier than end milling step for forming the conventional head window 44 (Figure 1), which requires measurements of length and depth. When the end milling of the head window 144 is completed, a final precision lathing for precise measurement of the rotary drum 140 is performed (S106).

Accordingly, the end milling process that is required to form the conventional head groove 42 in a conventional rotary drum is eliminated in the processing method of the present invention, and further, the processing of the head window 144 is facilitated.

As may be appreciated from the above description of the rotary drum 140 of the head drum assembly according to an exemplary embodiment of the present invention, the magnetic head 172 and the adhesive 180 may be substantially prevented from contacting the rotary drum 140 by the presence of the head distancing groove 142 annularly formed in the circumferential direction around the shaft 100 of the rotary drum 140 (see Figure 4). Also, since the lathing may substitute for the end milling, the end milling required in processing the conventional head groove 42 may be omitted.

As a result, manufacturing costs decrease, and load damage to the chuck and other tools caused during the end milling of the conventional head groove 42 may be reduced.

While the invention has been shown and described with reference to certain embodiments thereof, it will be understood by those skilled in the art that various changes in form and details may be made therein without departing from the scope of the invention as defined by the appended claims.

## Claims

1. A rotary drum for a head drum assembly of a magnetic recording apparatus having a surface in which a recess is formed to receive a recording head of a magnetic head unit attached to said surface so that the recording head does not touch the rotary drum, the rotary drum further including a slot through which a recording head of a magnetic head unit attached to said surface protrudes from the recess, **characterised in that** the recess is an annular groove.

2. A rotary drum according to claim 1 wherein a plurality of slots are formed in the surface of the rotary drum through which a recording head of a corresponding plurality of magnetic head units attached to said surface protrude from the recess.

3. A rotary drum according to claim 1 or claim 2 wherein the annular groove is coaxial with the axis of rotation of the rotary drum.

4. A method of manufacturing a rotary drum for a head drum assembly of a magnetic recording apparatus including the step of cutting an annular groove in a surface of the rotary drum to receive a recording head of a magnetic head unit attached to said surface so that the recording head does not touch the rotary drum and, a slot through which a recording head of a magnetic head unit attached to said surface protrudes from the annular groove.

5. A method according to claim 4 wherein the step of cutting the annular groove in the surface of the rotary drum is performed by lathing.

6. A head drum assembly, comprising a stationary drum fixed on a shaft; a rotary drum rotatably mounted on the shaft, a magnetic head unit attached to the rotary drum and having a magnetic head a head distancing groove circumferentially formed on the rotary drum to substantially prevent the magnetic head from contacting the rotary drum and at least one head window connected with the head distancing groove, and through which the magnetic head protrudes.

7. The head drum assembly of claim 6 wherein the head distancing groove is radially spaced from the shaft of the rotary drum.

8. The head drum assembly of claim 7 wherein a pair of diametrically opposed head windows are connected to the head distancing groove.

9. The head drum assembly of claim 7 wherein a horizontality adjusting member disposed in the rotary drum for controlling horizontality of the magnetic head unit.

10. The head drum assembly of claim 9 wherein a fastening member connects the magnetic head to the rotary drum.

11. The head drum assembly of claim 10 wherein a fastening hole is formed in the rotary drum adjacent to the head distancing groove and is adapted to receive the fastening member.

12. The head drum assembly of claim 11 wherein the horizontality adjusting member is disposed between the head distancing groove and the fastening member in the rotary drum.

13. The head drum assembly of claim 6 wherein the magnetic head is integrally formed with the magnetic head unit.

14. The head drum assembly of claim 6 wherein the magnetic head is secured to the magnetic head unit with adhesive.

15. The head drum assembly of claim 8 wherein a pair of diametrically opposed magnetic head units are connected to the rotary drum, the magnetic heads of the pair of magnetic head units protruding from the diametrically opposed head windows.

16. A method for processing a head drum assembly, comprising the steps of forming a head distancing groove by lathing a rotary drum formed by die casting, drilling and tapping the rotary drum and end milling a head window so that a magnetic head protrudes out of an outer circumference of the rotary drum.

17. The method of claim 16 further comprising a first lathing for processing a head distancing groove on a side of the rotary drum to substantially prevent contact of the magnetic head with the rotary drum.

18. The method of claim 17 further comprising a second lathing for secondarily processing the rotary drum after drilling and tapping the rotary drum.

19. The method of claim 16 further comprising securing a magnetic head unit having a magnetic head attached thereto to the rotary drum to substantially prevent contacting the rotary drum with the magnetic head.

20. The method of claim 16 wherein the drilling and tapping step further comprises drilling and tapping an adjusting hole and a fastening hole in the rotary drum.

21. The method of claim 16 wherein the end milling step further comprises end milling a pair of diametrically opposed head windows connected to the head distance groove.
